# EUROPEAN PATENT SPECIFICATION

(11) **EP 4 632 538 B1**
(45) Date of publication and mention of the grant of the patent: **02.09.2026**
(21) Application number: 25154678.4
(22) Date of filing: 29.01.2025
(51) Int. Cl.: G06F 3/01, G02B 27/01

(54) **DYNAMIC BOUNDARY FOR ARTIFICIAL REALITY SYSTEMS**
DYNAMISCHE GRENZE FÜR SYSTEME DER KÜNSTLICHEN REALITÄT
LIMITE DYNAMIQUE POUR SYSTÈMES DE RÉALITÉ ARTIFICIELLE

(30) Priority: 10.04.2024 US 202418631179
(43) Date of publication of application: 15.10.2025
(73) Proprietor: Meta Platforms Technologies, LLC, Menlo Park, CA 94025 (US)
(72) Inventor: Lee, Eugene, Menlo Park (US); Zhang, Ran, Menlo Park (US); Valori, James Alexander, Menlo Park (US); Zhou, Lu, Menlo Park (US)
(74) Representative: Murgitroyd & Company

(56) References cited:
- US-A1- 2016 027 212
- US-A1- 2021 352 255

## Description

### TECHNICAL FIELD

The present disclosure is directed to a dynamic boundary that triggers operating changes at an artificial reality system.

### BACKGROUND

Artificial reality devices are becoming more prevalent. As they become more popular, the applications implemented on such devices are becoming more sophisticated. Augmented reality or mixed reality applications can provide interactive three-dimensional experiences that combine the real-world environment with virtual objects. Virtual reality applications can provide a self-contained three-dimensional computer environment. Augmented reality, mixed reality, and/or virtual reality experiences can be observed by a user through a head-mounted display of an artificial reality system, such as glasses or a headset. Some artificial reality experiences may obstruct the user's perception of the real-world and thus techniques may be implemented to secure and/or improve the user experience.

US 2016/027212 A1 describes an HMD device with a see-through display and depth sensing capability which is configured to selectively dim or fade out a display of a virtual reality environment to enable a user to see the real world without obstruction by the virtual world when a distance between the user and a real world object is determined to be less than a threshold distance. The current height of the user's head (i.e., the distance from head to ground) may be utilized when performing the dimming/fading so that different threshold distances can be used depending on whether the user is standing or seated.

US 2021/352255 A1 describes techniques for transitioning between imagery and sounds of two different environments, such as a virtual environment and a real environment. A view of a first environment and audio associated with the first environment are provided. In response to detecting a transition event, a view of the first environment combined with a second environment is provided. The combined view includes imagery of the first environment at a first visibility value and imagery of the second environment at a second visibility value. In addition, in response to detecting a transition event, the first environment audio is mixed with audio associated with the second environment.

### SUMMARY OF INVENTION

In accordance with the invention in a first aspect, there is provided a method according to claim 1.

In some embodiments, the dynamic boundary is formed around the user at a predefined size and predefined shape, and expanding the size of the dynamic boundary comprises enlarging the predefined size while maintaining the predefined shape.

In some embodiments, the dynamic boundary is formed with respect to a location of a predefined part of a body of the user.

In some embodiments, the predefined part of the body of the user comprises the user's head.

In some embodiments, the dynamic boundary comprises a cylinder with a predefined height and radius.

In some embodiments, the predefined height and radius of the cylinder and the distance threshold of the expansion criteria causes the expanding of the dynamic boundary in response to the user moving from seated to standing or standing to seated.

In some embodiments, the XR system monitors user movement via one or more sensors, user movement meets the expansion criteria when user movement is detected within the one or more distance thresholds with respect to the dynamic boundary, and user movement meets the pop criteria when the user movement meets or exceeds the velocity threshold.

In some embodiments, the XR system monitors user movement via one or more sensors, user movement meets the expansion criteria when user movement is detected within the one or more distance thresholds with respect to the dynamic boundary, and user movement meets the pop criteria when: a) the user movement is within the one or more pop distance thresholds with respect to the dynamic boundary; and b) the user movement meets or exceeds the velocity threshold.

In some embodiments, the method further comprises: in response to user movement that meets a reform criteria of the dynamic boundary after the expanding and the pausing of the VR application: resuming the paused VR application; fading the display of the XR system from the pass-through visual at the second opacity to the VR environment; and reforming the dynamic boundary with respect to the user, wherein the reform criteria comprises a reform velocity threshold.

In some embodiments, the dynamic boundary is automatically formed around the user at a predefined size and predefined shape, and the reformed dynamic boundary comprises the predefined size and the predefined shape.

In some embodiments, the dynamic boundary is reformed with respect to a) a predefined part of a body of the user at a time of reforming, or b) a combination of the predefined part of the body of the user at the time of reforming and a location of the dynamic boundary prior to pausing the executing VR application.

In some embodiments, the XR system monitors user movements via one or more sensors, user movement meets the expansion criteria when user movement is detected within the one or more distance thresholds with respect to the dynamic boundary, user movement meets the pop criteria when user movement that meets or exceeds the velocity threshold is detected, and user movement meets the reform criteria when, after the dynamic boundary is expanded and the VR application is paused, user movement that meets or is below the reform velocity threshold is detected for a threshold duration of time.

In some embodiments, the XR system monitors user movements via one or more sensors, user movement meets the expansion criteria when user movement is detected within the one or more distance thresholds with respect to the dynamic boundary, user movement meets the pop criteria when: a) user movement is detected within the one or more pop distance thresholds with respect to the dynamic boundary and b) user movement that meets or exceeds the velocity threshold is detected, and user movement meets the reform criteria when, after the dynamic boundary is expanded and the VR application is paused, user movement that meets or is below the reform velocity threshold is detected for a threshold duration of time.

In accordance with the invention in a second aspect, there is provided a computer-readable storage medium according to claim 12.

Thus, the medium of the second aspect is for example adapted to perform the method of the first aspect and for example the second aspect of the invention comprises a computer-readable storage medium is provided storing instructions that, when executed by a computing system, cause the computing system to perform a process for triggering operating changes at an artificial reality (XR) system via a dynamic boundary, the process comprising the method of the first aspect of the invention herein described.

In some embodiments, the dynamic boundary is formed around the user at a predefined size and predefined shape, and expanding the size of the dynamic boundary comprises enlarging the predefined size while maintaining the predefined shape.

In some embodiments, the dynamic boundary is formed with respect to a location of a predefined part of a body of the user.

In some embodiments, the dynamic boundary comprises a cylinder with a predefined height and radius.

In some embodiments, the predefined height and radius of the cylinder and the distance threshold of the expansion criteria causes the expanding of the dynamic boundary in response to the user moving from seated to standing or standing to seated.

In some embodiments, the XR system monitors user movement via one or more sensors, user movement meets the expansion criteria when user movement is detected within the one or more distance thresholds with respect to the dynamic boundary, and user movement meets the pop criteria when the user movement meets or exceeds the velocity threshold.

In some embodiments, the XR system monitors user movement via one or more sensors, user movement meets the expansion criteria when user movement is detected within the one or more distance thresholds with respect to the dynamic boundary, and user movement meets the pop criteria when: a) the user movement is within the one or more pop distance thresholds with respect to the dynamic boundary; and b) the user movement meets or exceeds the velocity threshold.

In some embodiments, the process further comprises: in response to user movement that meets a reform criteria of the dynamic boundary after the expanding and the pausing of the VR application: resuming the paused VR application; fading the display of the XR system from the pass-through visual at the second opacity to the VR environment; and reforming the dynamic boundary with respect to the user, wherein the reform criteria comprises a reform velocity threshold.

In accordance with the invention in a third aspect, there is provided an artificial reality (XR) system according to claim 14.

In some embodiments, in response to user movement that meets the reform criteria while the dynamic boundary is in the expanded state, the XR system transitions from displaying the pass-through visual at the first opacity to displaying the VR environment, and in response to user movement that meets the reform criteria while the dynamic boundary is in the popped state, the XR system transitions from displaying the pass-through visual at the second opacity to displaying the VR environment.

In some embodiments, the system of the third aspect may be adapted to perform the method of the first aspect and for example the third aspect of the invention for example comprises an artificial reality (XR) system for triggering operating changes via a dynamic boundary comprising: one or more processors; and one or more memories storing instructions that, when executed by the one or more processors, cause the computing system to perform a process comprising, the process comprising the method of the first aspect of the invention herein described.

Preferred features and illustrative examples of each aspect of the invention will thus be understood to be applicable to other aspects of the invention accordingly.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5A is a diagram illustrating a computer generated environment displayed to a user.
Figure 5B is a diagram illustrating a pass-through visual displayed to a user.
Figure 6 is a state diagram illustrating example active, breaking, expanded, popped, and reforming states for a dynamic boundary.
Figure 7 is a conceptual diagram illustrating different states for a dynamic boundary.
Figure 8 is a conceptual diagram illustrating example dynamic boundary shapes.
Figure 9 is a conceptual diagram illustrating example variations for reforming a dynamic boundary.
Figure 10A is a first part of a flow diagram illustrating a process used in some implementations of the present technology for triggering operating changes at an artificial reality (XR) system via a dynamic boundary.
Figure 10B is a second part of the flow diagram illustrating the process used in some implementations of the present technology for a triggered popped state of a dynamic boundary.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to a dynamic boundary that triggers operating changes at an artificial reality system. Artificial reality systems provide immersive visual displays to a user, such as via a head-mounted display. At times, the immersive displays obstruct the user's perception of the real-world environment. Some artificial reality systems implement a boundary that enforces safety conditions while operating these systems. For example, operations at the artificial reality system, such as the artificial reality environment displayed to a user, may be changed in response to user movements that approach and/or cross the boundary. Implementations of a dynamic boundary manager enforce a dynamic boundary for a user. The dynamic boundary manager can automatically generate a dynamic boundary that corresponds to the user, such as when the artificial reality system operates in a certain operating condition. The dynamic boundary manager can enforce dynamic boundary criteria. For example, user movements can trigger expansion of the dynamic boundary, popping of the dynamic boundary, and/or reforming the dynamic boundary. Responsive to these triggers, the dynamic boundary manager can also cause changes to operations at the artificial reality system, such as pause(s) to executing applications and/or changes to the artificial reality environment displayed to the user (e.g., transitions to and from a virtual reality environment, a pass-through visual, etc.).

The dynamic boundary manager can automatically generate a dynamic boundary for the user, such as when the artificial reality system operates in certain operating mode(s). Example operating mode(s) include stationary mode, virtual reality mode, seated mode, standing mode, or any combination thereof. In some implementations, the dynamic boundary is formed with respect to a predefined portion of the user's body, such as the user's head, torso, or any other suitable reference point of the user's body. The dynamic boundary can comprise a predefined size and shape, such as a cylinder with a predefined radius and height, a sphere with a predefined radius, a cuboid with predefined dimensions, or any other suitable shape. In some implementations, the size of the automatically generated dynamic boundary can be based on the user's body measurements (e.g., arm span, height, stride length, etc.).

The artificial reality system can display an immersive environment to the user, such as a virtual reality environment, while the user is located within the dynamic boundary. The dynamic boundary manager can detect triggers of dynamic boundary criteria in response to user movement, such as when the user moves within a threshold distance of the dynamic boundary and/or when the user's velocity meets or exceeds a velocity criteria. The dynamic boundary manager can cause changes to operations at the artificiality reality system in response to these triggers, such as a transition from the virtual reality environment to a pass-through visual that includes the user's real-world environment. For example, certain user movements may risk the user's safety when the user is in a virtual reality environment and/or may be indicative of a user activity that is more conducive to a pass-through visual display. The dynamic boundary manager can trigger changes to the dynamic boundary and/or to the operations at the artificial reality system to improve the user's experience in response to these user movements.

In some implementations, the dynamic boundary manager can enforce an expansion criteria and a pop criteria. For example, the expansion criteria can comprise one or more distance thresholds that are triggered by user movements that are within close proximity to the dynamic boundary and/or exceed the dynamic boundary. Responsive to the triggered expansion criteria, the dynamic boundary manager can expand the dynamic boundary, such as the size of the boundary, and/or cause a transition from a displayed virtual reality environment to a pass-through visual of the user's real-world environment. The dynamic boundary can be expanded based on a predefined metric, the user's body measurements (e.g., arm span, height, stride length, etc.), and/or a velocity for the user's movements. In some implementations, the pass-through visual of the user's real-world environment transitioned to, that is responsive to the expansion criteria, comprises a pass-through visual displayed at a first opacity (e.g., opacity of 60%, 70%, 80%, etc.). In this example, triggering the expansion criteria can indicate to the user, via the display transition, that the user's movements have triggered the dynamic boundary, however the dynamic boundary has not yet been fully triggered (e.g., "popped"), and thus the user can maintain the virtual reality environment by staying within the dynamic boundary (e.g., by halting movements and/or moving back towards a center of the dynamic boundary).

The pop criteria can be triggered after the dynamic boundary is expanded (e.g., after triggering the expansion criteria). For example, the pop criteria can comprise: one or more distance thresholds that are triggered by user movement within close proximity to the expanded dynamic boundary or that exceed the expanded dynamic boundary; and/or a velocity criteria that is triggered by user movement that meets or exceeds a velocity threshold. Responsive to the triggered pop criteria, the dynamic boundary manager can pop the dynamic boundary, pause executing applications at the artificial reality system (e.g., an executing virtual reality application), and/or cause a transition from a pass-through visual of the user's real-world environment displayed at a first opacity to a pass-through visual of the user's real-world environment displayed at a second opacity (e.g., 90%, 100%, etc.), where the second opacity is greater than the first opacity. In this example, triggering the pop criteria can indicate to the user, via the display transition, that the user's movements have popped the dynamic boundary such that the virtual reality environment has been paused (e.g., to ensure user safety, to improve the user experience while the user moves, etc.).

The dynamic boundary manager can also enforce a reform criteria. For example, after the dynamic boundary is expanded and/or popped, the dynamic boundary manager can reform the dynamic boundary when user movements meet the reform criteria. The reform criteria can comprise a reform velocity criteria that is triggered by user movements that meet or are below a reform velocity threshold for a threshold duration of time. In this example, when a user's movements indicate the user is stationary (e.g., below the reform velocity threshold for the threshold duration of time), the boundary manager can reform the dynamic boundary such that the user can be immersed in the virtual reality environment once again. For example, responsive to the triggered reform criteria, the dynamic boundary manager can reform the dynamic boundary (e.g., with respect to the user, at the time of reforming), resume execution of the paused application(s) at the artificial reality system (e.g., a paused virtual reality application), and/or cause a transition from the displayed pass-through visual of the user's real-world environment to the resumed virtual reality environment. In this example, triggering the reform criteria permits resumed user interactions with the virtual reality environment within the safety of a dynamic boundary space. In some implementations, the reformed dynamic boundary can be generated at an initial size and enlarged to the predefined size associated with the automatically generated dynamic boundary.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a passthrough display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Conventional XR systems can include a boundary to maintain user safety, such as while the user is immersed in a virtual reality environment, however these boundaries lack flexibility and include rigid forms of triggered system functionality. For example, often such boundaries require a setup procedure, and then use of such boundaries is limited to the real-world environment in which the boundary is set. In addition, conventional systems lack dynamic boundaries that can change size and shape in response to user movement. Further still, XR systems often lack varying levels of functionality in response to a triggered boundary, instead causing unmitigated disruption to the user's experience.

Implementations of a dynamic boundary, disclosed herein, add flexibility and selective XR system response to triggered dynamic boundary criteria. For example, triggered dynamic boundary criteria can cause one or more of: dynamic boundary expansion, transition from a VR environment to a pass-through visual at a limited opacity (e.g., less than 100%), transition to a full pass-through visual, pausing an executing VR application, and the like. This variety of triggered XR system operations, which are each configured for the dynamic boundary criteria that is met by user movement, tailor system functionality to specific user movement scenarios (e.g., standing, sitting, moving fast, moving a large distance, moving slow, moving a small distance, etc.). In addition, a reform criteria for the dynamic boundary supports resuming a user's artificial reality experience and minimizing disruption to the user. The dynamic boundary can be automatically generated with respect to the user (e.g., the user's body), and thus improves upon the cumbersome setup procedure required by systems that enforce conventional boundaries.

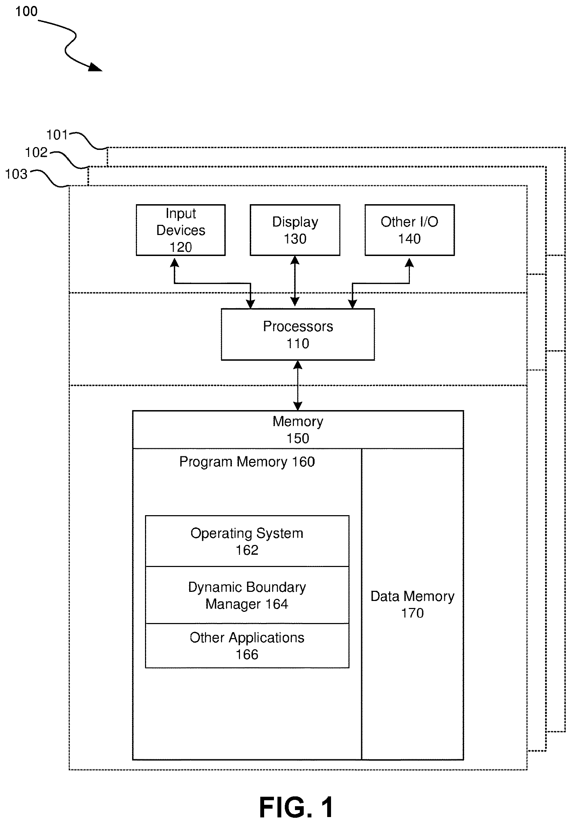

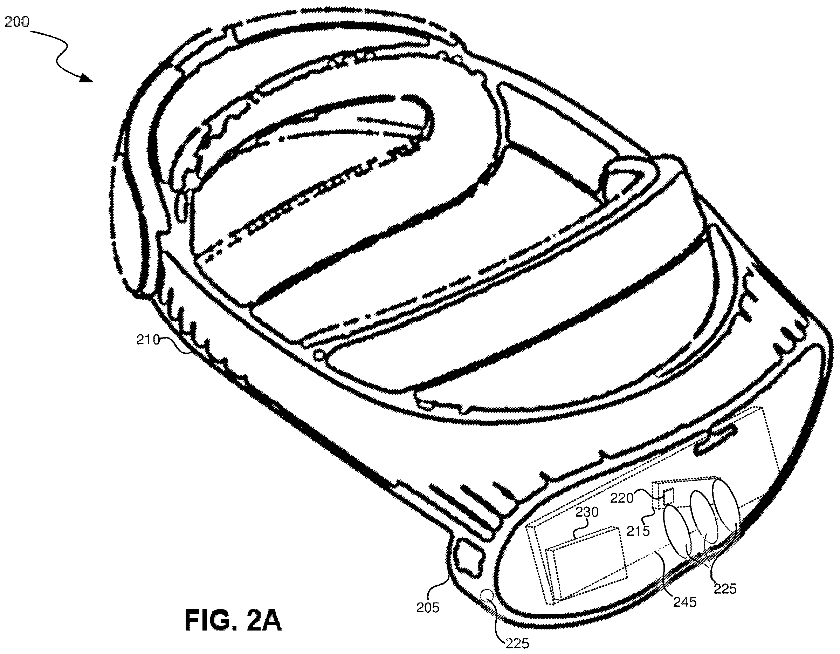

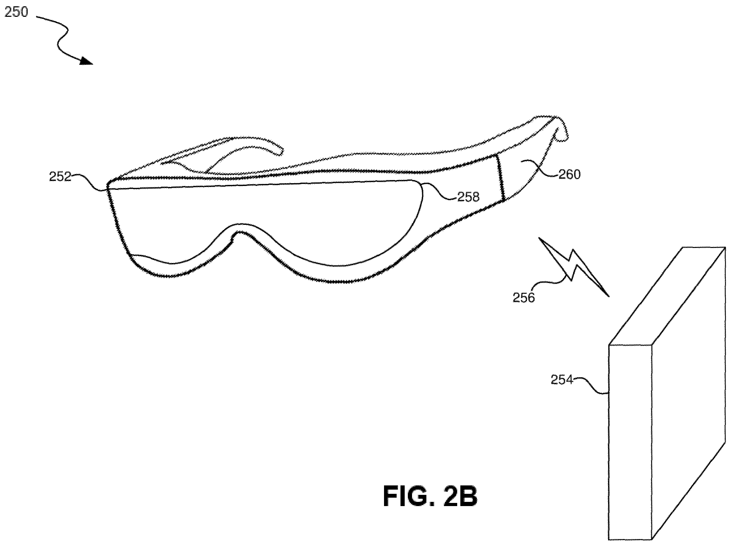

Several implementations are discussed below in more detail in reference to the figures. Figure 1 is a block diagram illustrating an overview of devices on which some implementations of the disclosed technology can operate. The devices can comprise hardware components of a computing system 100 that trigger operating changes at an artificial reality system via a dynamic boundary. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, dynamic boundary manager 164, and other application programs 166. Memory 150 can also include data memory 170 that can include, e.g., XR application data, dynamic boundary thresholds and criteria, location information for users and/or historical boundaries, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

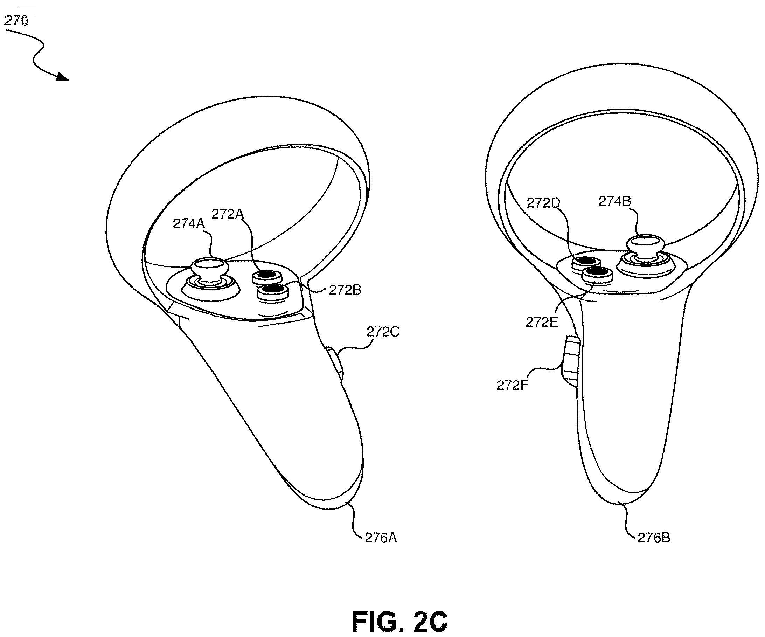

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

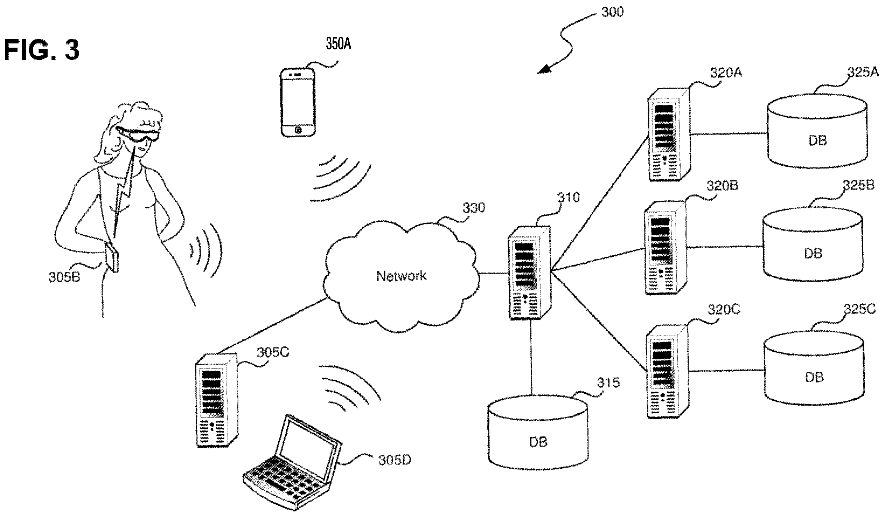

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

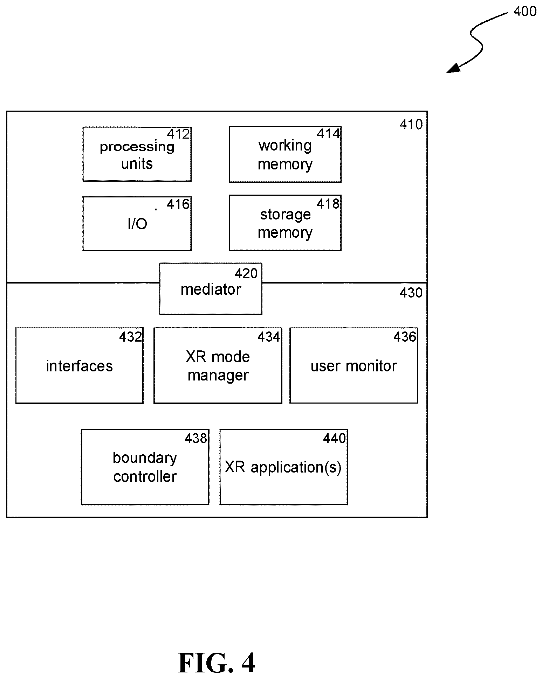

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for triggering operating changes at an XR system via a dynamic boundary. Specialized components 430 can include XR mode manager 434, user monitor 436, boundary controller 438, XR application(s) 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

XR mode manager 434 is a manager for operating an XR system in different modes, such as VR mode or pass-through mode. In VR mode the XR system can display a computer generated environment to the user, such as a VR experience. In passthrough mode the XR system can display the user's real-world environment, captured via one or more cameras of the XR system, to the user. As used herein, pass-through mode may refer to a display that includes the user's real-world environment and/or a mix of the user's real-world environment and one or more computer generated components (e.g., virtual objects).

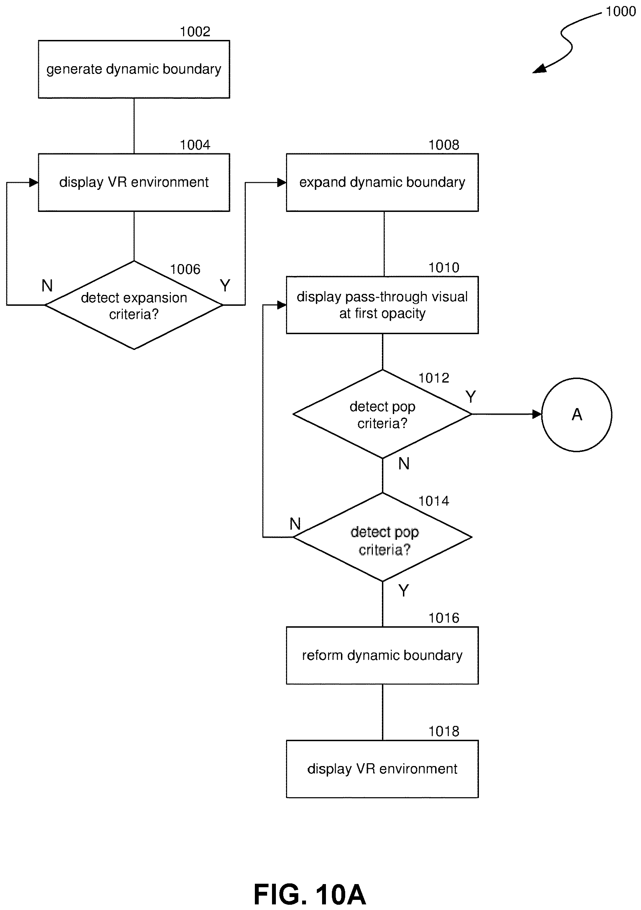

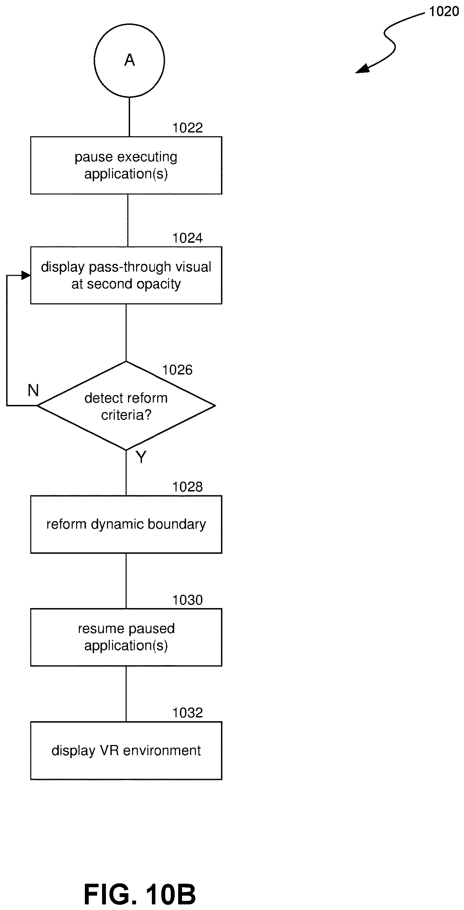

XR mode manager 434 can transition between VR mode and pass-through mode, for example based on triggers identified by boundary controller 438. XR mode manager 434 can implement different transition variations, such as a fade from one environment to the next (e.g., pass-through to VR, VR to pass-through, etc.), fades with different timing parameters (e.g., over different time intervals, such as 1 second, 1.5 second, 2 seconds, 3 seconds, 5 seconds, etc., and/or different fade rates, such as slow to fast fade, fast to slow fade, etc.), quick transitions from one environment to the next (e.g., to enforce safety protocols), and the like. XR mode manager 434 can also pause and/or resume applications executing at the XR system, such as XR application(s) 440. Further details regarding XR mode manager 434 are described with respect to blocks 1004, 1010, 1018, 1022, 1024, 1030, and 1032 of Figures 10A and 10B.

User monitor 436 can monitor movements of an XR system user. For example, one or more sensors (e.g., cameras, hand-held controllers comprising IMUs, worn sensors, etc.) can track a user's movements within the user's real-world environment. Based on the tracked user movement, boundary controller 438 can detect user movements that meet dynamic boundary criteria. Further details regarding user monitor 436 are described with respect to blocks 1006, 1012, 1014, and 1026 of Figures 10A and 10B.

Boundary controller 438 can dynamically control a dynamic boundary and trigger XR operating changes in response to user movements. For example, boundary controller 438 can generate a dynamic boundary around a user (e.g., with respect to a user's body), such as a boundary comprising a predefined shape and size. Boundary controller 438 can compare user movement to criteria of the generated dynamic boundary, such as distance threshold(s) and/or velocity threshold(s). Example dynamic boundary criteria comprise an expansion criteria, a pop criteria, and a reform criteria. In response to triggered boundary criteria, boundary controller 438 can communicate with XR mode manager 434 to cause operating changes at the XR system, such as transitions between displayed environments, pausing and/or resuming one or more XR application(s) 440, and the like. Further details regarding boundary controller 438 are described with respect to blocks 1002, 1006, 1008, 1012,1014, 1016, 1026, and 1028 of Figures 10A and 10B.

XR application(s) 440 can be applications that execute at an XR system, such as applications that generate XR environments (e.g., a three-dimensional immersive environment). Example XR application(s) 440 can generate a fully computer generated environment, such as a VR environment, a pass-through environment with virtual components, or any other suitable XR environment. XR application(s) 440 can execute, at least in part, at the XR system to generate the XR environment. Further details regarding XR application(s) 440 are described with respect to blocks 1022 and 1030 of Figure 10B.

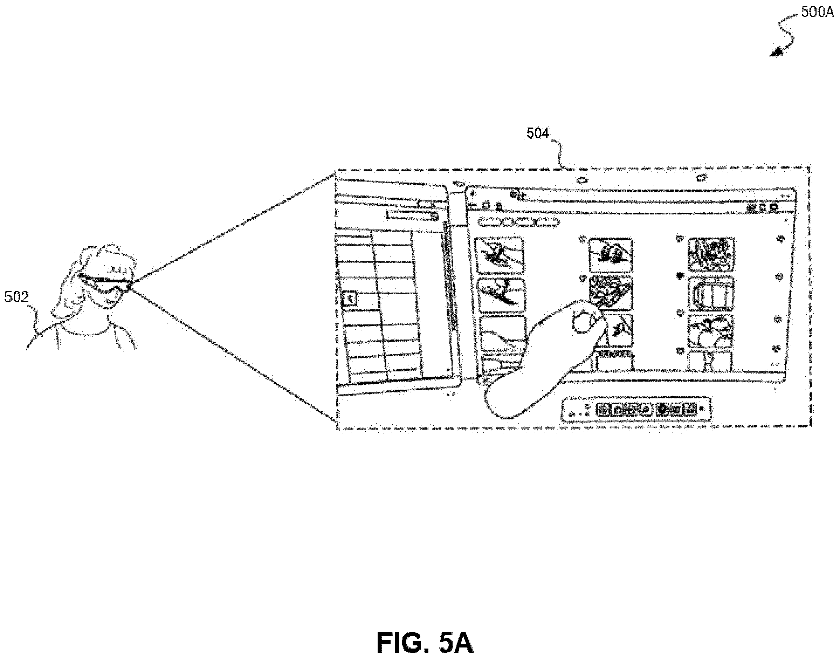

XR systems can display content to a user, such as VR environment and/or the user's real-world environment via a pass-through visual display. Figure 5A is a diagram 500A illustrating a computer generated environment displayed to a user. Diagram 500A includes user 502 and VR environment 504. An XR system can display VR environment 504 to user 502 via an application executing at the XR system, such as an immersive gaming application, system shell that provides an immersive environment, or any other suitable application that provides a VR environment for display to a user.

When VR environment 504 is displayed to user 502, the user's perception of the real-world can be obstructed. Accordingly, certain user movements may pose security risks and/or certain user activities may be encumbered. To address these risks / encumbrances. The XR system can display a pass-through visual that includes the user's real-world surroundings in certain scenarios.

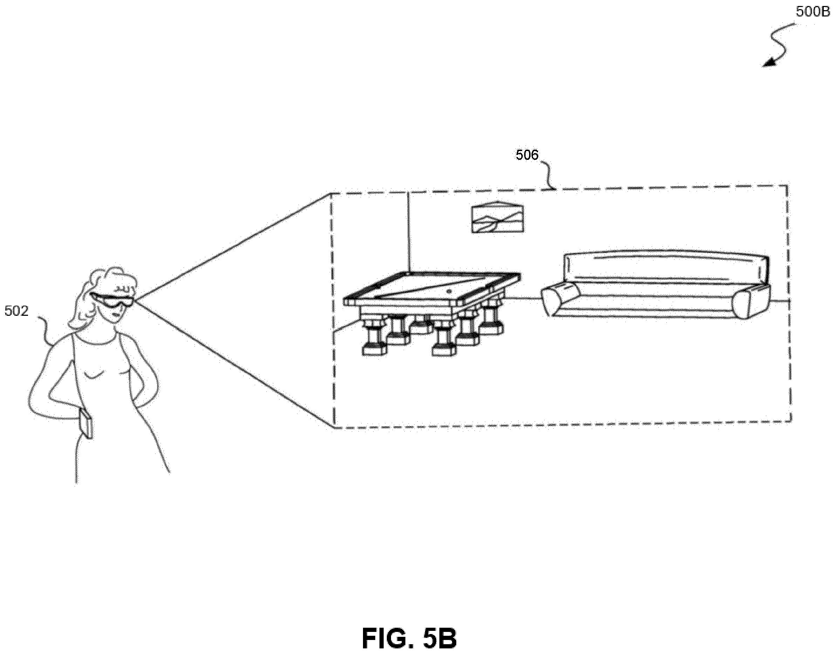

Figure 5B is a diagram 500B illustrating a pass-through visual displayed to a user. Diagram 500B includes user 502 and pass-through environment 506. When passthrough environment 506 is displayed to user 502, the user's perception of the real-world surroundings is no longer fully obstructed and user 502 may be more readily able to perform certain activities or safely make certain movements.

Implementations of a dynamic boundary can trigger transitions from VR environment 504 to pass-through environment 506 and/or pass-through environment 506 to VR environment 504. For example, the XR system can monitor movement by user 502, and the monitored movement can be compared to dynamic boundary criteria (e.g., expansion criteria, pop criteria, reform criteria) to trigger operating changes at the XR system. Example operating changes include expanding the dynamic boundary, popping the dynamic boundary and pausing an executing application, transitioning from a VR environment to a pass-through visual, transitioning from the pass-through visual to a VR environment, reforming the dynamic boundary and resuming execution of an application, and any other suitable XR system functionality. In some implementations, the dynamic boundary can comprise different states, and transitions among these states can be triggered by user movements that meet dynamic boundary criteria.

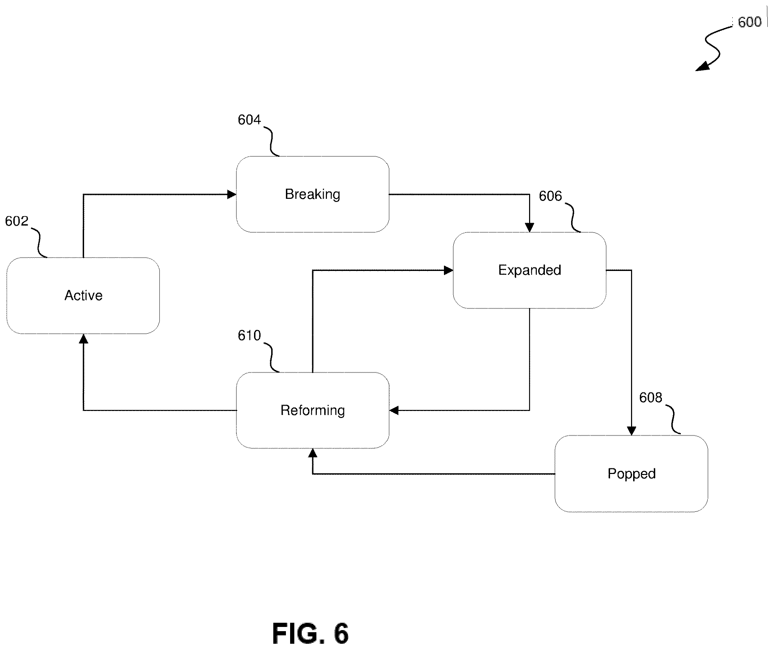

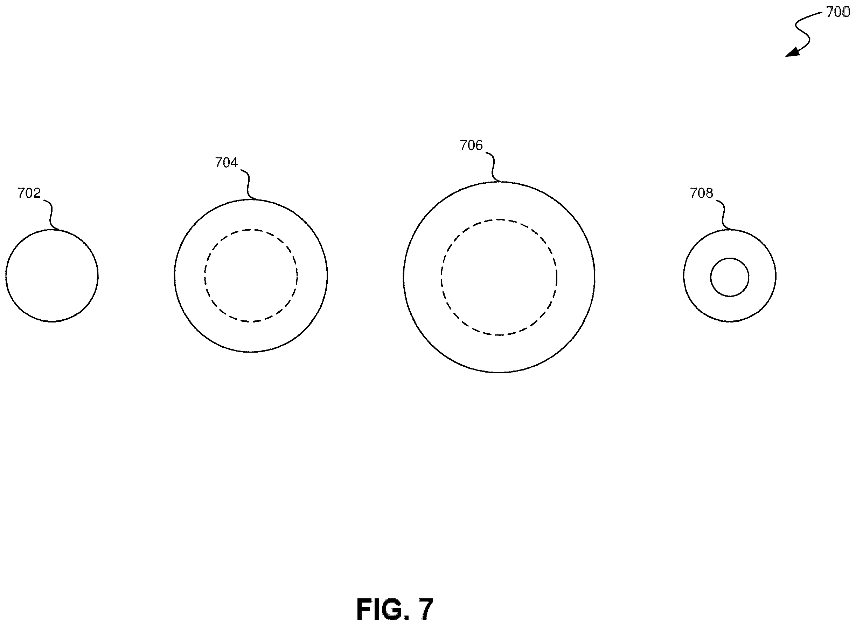

Figure 6 is a state diagram 600 illustrating example active, breaking, expanded, popped, and reforming states for a dynamic boundary. Diagram 600 comprises a state diagram that includes active state 602, breaking state 604, expanded state 606, popped state 608, and reforming state 610. Any suitable states for the dynamic boundary can be added or omitted. Figure 7 is a conceptual diagram 700 illustrating different states for a dynamic boundary. Diagram 700 includes formed dynamic boundary 702, breaking dynamic boundary 704, expanded dynamic boundary 706, and reforming dynamic boundary 708.

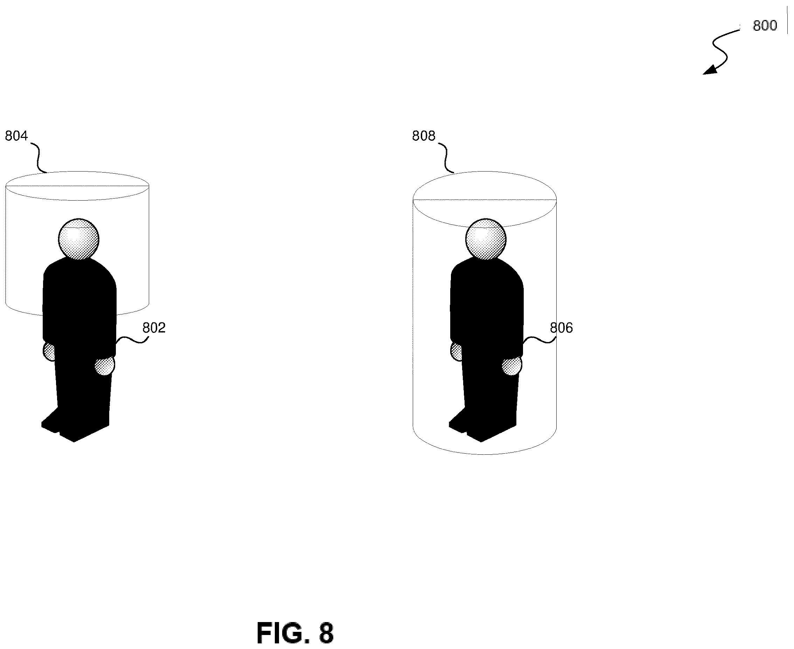

Returning to Figure 6, at active state 602, a dynamic boundary can be formed around a user, and the user can be displayed a computed generated environment, such as a VR environment. In active state 602, the user's movements may be conducive and/or safe for a VR environment. Formed dynamic boundary 702 of Figure 7 illustrates the dynamic boundary at active state 602. For example, the formed dynamic boundary 702 can be located with respect to a user's body at the time of forming (e.g., surrounding the user) and comprise a defined shape and size. Figure 8 further describes variations for forming a dynamic boundary with respect to a user.

User movements may cause state transitions of the dynamic boundary and resulting XR system functionality. A transition from active state 602 to breaking state 604 can be triggered by user movement that meets an expansion criteria for the dynamic boundary. For example, the expansion criteria can comprise one or more threshold distance metrics. Example user movement includes any suitable body movement, (e.g., arm movement, head movement, walking, running, jumping, standing, sitting, etc.). Example threshold proximities include 0 meters (e.g., user movement that breaks the dynamic boundary), .01 meters, .05 meters, .1 meters, .2 meters, and the like.

In some implementations, the expansion criteria can comprise a first threshold distance and a second threshold distance. For example, user movement that meets the first threshold distance can cause a transition from active state 602 to breaking state 604. User movement that meets the second threshold distance can cause a transition from breaking state 604 to expanded state 606. Breaking dynamic boundary 704 of Figure 7 illustrates an inner circle, which can correspond to the first threshold distance, and an outer circle, which can correspond to the second threshold distance. User movement that breaks the inner circle (e.g., meets the first threshold distance) can trigger a transition from active state 602 to breaking state 604.

At breaking state 604, the display of the XR system can be transitioned. For example, the XR system display can be transitioned from a VR environment to a pass-through visual (e.g. pass-through of the user's real-world environment as captured by XR system cameras) at a first opacity that is less than 100% (e.g., 60%, 70%, 80%, etc.). The semi-transparent nature of the pass-through visual at the first opacity can indicate to the user that the user can return to the VR environment by repositioning within the dynamic boundary. In some implementations, the fade from the VR environment to the pass-through visual can occur over a defined duration of time (e.g., 0.3 seconds, 0.4 second, 0.5 seconds, etc.) or based on the user's movements. For example, the fade from the VR environment to the pass-through visual at the first opacity can correspond to the user's movement that progresses from the inner boundary of breaking dynamic boundary 704 to the outer boundary.

Breaking state 604 can transition to expanded state 606, for example after user movement meets the second distance threshold of the expansion criteria. At expanded state 606 the dynamic boundary can be expanded. The expansion can comprise a predefined size expansion (e.g., 0.2 meters, 0.3 meters, 0.4 meters, etc.), an expansion based on the user's body measurements (e.g., arm length, height, stride length, etc.), or any other suitable expansion. For example, expansion can comprise a first predefined size when it is detected that the user is seated and a second predefined size when it is detected that the user is standing. In some implementations, the user's movement velocity can be calculated over a period of time, and the expansion to the size of the dynamic boundary can be based on the user's velocity (e.g., larger for a higher velocity, smaller for a lower velocity, etc.).

A transition from expanded state 606 to popped state 608 can be triggered by user movement that meets a pop criteria for the dynamic boundary. In some implementations, the pop criteria can comprise a first threshold distance and a second threshold distance. For example, user movement that meets the first threshold distance can trigger a fade from a pass-through visual at a first opacity to a pass-through visual at a second opacity (e.g., fade from 80% to 100%, etc.). User movement that meets the second threshold distance can trigger a pause to executing application(s).

Expanded dynamic boundary 706 of Figure 7 illustrates an inner circle, which can correspond to the first threshold distance of the pop criteria, and an outer circle, which can correspond to the second threshold distance of the pop criteria. User movement that breaks the inner circle (e.g., meets the first threshold distance) can trigger a fade from a pass-through visual displayed at a first opacity (e.g., less than 100%) to a pass-through visual displayed at a second opacity (e.g., 100%). The fade can progress over a defined duration of time, or the fade progression can correspond to user movement that progresses from first threshold distance (e.g., the inner circle of expanded dynamic boundary 706) to the second threshold distance (e.g., the outer circle of expanded dynamic boundary 706)

User movement that breaks the outer circle of expanded dynamic boundary 706 (e.g., meets the second threshold distance) can trigger a pause to one or more executing applications. For example, application(s) executing at the XR system can provide a VR environment for display to a user. In response to the second distance threshold of the pop criteria being broken by user movement, the executing application(s) can be paused. In some implementations, while the XR system performs fade(s) from the VR environment to the pass-through visual (e.g., at different opacity levels), such as in response to the expansion criteria and/or pop criteria being met, audio from the executing application(s) can be output to the user (e.g., at 100% volume, 80% volume, 50% volume, 20% volume, etc.). The pause to the executing application(s) can also pause the audio from the executing application(s), and thus signal to the user that the application(s) have been paused.

Once the second distance threshold of the pop criteria is met, the dynamic boundary can transition from expanded state 606 to popped state 608. In some implementations, the pop criteria can include a velocity criteria, and user movement that meets the velocity criteria can cause: a) transition from the pass-through visual displayed at the first opacity to the pass-through visual displayed at the second opacity; and b) pausing of the executing application(s). For example, once the velocity criteria is met, the dynamic boundary can transition from expanded state 606 to popped state 608. The velocity criteria can provide an efficient mechanism for quickly transitioning to popped state 608 if the user is moving quickly, and thus is highly likely to pop the dynamic boundary.

At popped state 608, the executing application(s) can remain paused and the XR system can display the pass-through visual of the user's real-world surroundings until a reform criteria for the dynamic boundary is met. For example, the user may move to perform certain actions in the user's real-world environment that are not conducive to performing while the user is displayed an immersive VR environment. A transition from popped state 608 to reforming state 610 can be triggered by user movement that meets a reform criteria for the dynamic boundary. For example, the reform criteria can be a velocity threshold and a threshold duration of time, such that user movement that is below the velocity threshold (e.g., 0.3 m/s, 0.2 m/s, 0.1 m/s, etc.) for the threshold duration of time (e.g., 0.4 seconds, 0.5 seconds, 0.8 seconds, 1 second, 2 seconds, etc.) meets the reform criteria.

At reforming state 610, the XR system can resume execution of paused application(s) (e.g., paused at popped state 608) and transition from the pass-through visual to the VR environment provided by the resumed application(s). In some implementations, the transition can comprise a fade from the pass-through visual (e.g., at the current displayed opacity) to the VR environment over a period of time (e.g., 1 second, 1.2 second, 1.5 seconds, etc.). In some implementations, the dynamic boundary that is reformed at reforming state 610 can comprise a similar size and shape to the dynamic boundary initially formed (e.g., a cylinder with a defined radius and height). In another example, the dynamic boundary that is reformed at reforming state 610 can be initially reformed at a smaller size and grown over a defined period of time (e.g., 1 second, 1.2 second, 1.5 seconds, etc.).

Reforming dynamic boundary 708 of Figure 7 illustrates an inner circle, which can correspond to an initial size for a reformed dynamic boundary, and an outer circle, which can correspond to the size of the dynamic boundary after growing over the defined period of time. While the dynamic boundary is reforming (e.g., growing) user movement that meets a distance criteria for the reforming dynamic boundary (e.g., crosses the dynamic boundary) can cancel the reforming and cause a transition from reforming state 610 to expanded state 606. For example, a canceled reforming can maintain a display of the pass-through visual to the user until reforming the dynamic boundary is complete.

Reforming state 610 can transition to active state 602 once the dynamic boundary has completed its reforming. In active state 602, the XR system displays the VR environment to the user, for example until user movement meets the expansion criteria of the dynamic boundary.

In some scenarios, the dynamic boundary may transition from expanded state 606 to reforming state 610 without progressing to popped state 608. For example, a transition from expanded state 606 to reforming state 610 can be triggered by user movement that meets the reform criteria for the dynamic boundary, such as when the user movement is below the velocity threshold of the reform criteria for the threshold duration of time of the reform criteria. In this example, paused application(s) are not resumed, as no application(s) have been paused due to the lack of progression to popped state 608. However, a transition from the pass-through visual at the displayed opacity (e.g., 80%) to the VR environment can be performed (e.g., a fade over a duration of time). In addition, the dynamic boundary can be reformed (e.g., generated at an initial size and grown), and reforming state 610 can transition to active state 602 once the dynamic boundary has completed its reforming.

In some implementations, the user's real-world environment can be mapped, and mapped real-world object(s) can be used as a criteria to pop the dynamic boundary. For example, the XR system can map the user's real-world environment via one or more cameras. In some implementations, the user can be directed to move about the real-world environment to capture different portions of the environment such that a mapping can be generated.

The location(s) of the real-world objects can be used to form and/or expand the dynamic boundary. For example, a defined shape and/or size of a dynamic boundary can be altered to account for mapped real-world objects. In some implementations, the size and/or shape of the dynamic boundary can be adjusted so that the boundary does not overlap a mapped real-world object. In another example, the size and/or shape of the dynamic boundary can be adjusted so that the boundary is at least a threshold distance from a mapped real-world object.

In some implementations, the mapped location for a real-world object can be used to enforce an additional criteria that triggers popping the dynamic boundary. For example, the additional criteria can comprise a threshold distance, and when user movement is detected within the threshold distance from the real-world object, the dynamic boundary can be popped. For example, the XR system may transition (e.g., fade or quickly transition) from a displayed VR environment to a pass-through visual of the user's real-world surroundings and/or can pause executing application(s). The XR system can similarly reform the dynamic boundary when the user meets a reform criteria and the user is no longer near the real-world object (e.g., is outside the distance threshold), such that the paused application(s) can be resumed and the user can return to the VR environment.

Figure 8 is a conceptual diagram 800 illustrating example dynamic boundary shapes. Diagram 800 includes user 802, dynamic boundary 804, user 806, and dynamic boundary 808. Dynamic boundary 804 is an example of a dynamic boundary generated with respect to a part of the body of user 802, in particular the user's head. Dynamic boundary 804 comprises a cylinder with a defined radius and height positioned according to the user's head (e.g., the location of the user's head at the time of forming the dynamic boundary). In this example, the user's head movement can be monitored and used to trigger dynamic boundary criteria (e.g., expansion criteria, pop criteria, reform criteria). A dynamic boundary relative to the head of a user can detect user movements such as standing and sitting, and trigger resultant XR system functionality (e.g., fading into or out of VR environments, pass-through visuals, etc.).

Dynamic boundary 808 is an example of a dynamic boundary generated with respect to the entirely of the body of user 806 (or the torso of user 806). Dynamic boundary 806 comprises a defined radius and height positioned according to the user's body (e.g., the location of the user's body at the time of forming the dynamic boundary). In this example, any suitable movements by user 806 (e.g., arm movement, leg movement, head movement, etc.) can be monitored and used to trigger dynamic boundary criteria (e.g., expansion criteria, pop criteria, reform criteria).

Formed dynamic boundaries can comprise any suitable shape and/or size. For example, the dynamic boundary can comprise a cylinder, sphere, cuboid, or any other suitable shape. In addition, the size (e.g., dimensions of the shape) can be predefined and/or based on the body of the user (e.g., arm length, height, stride length, etc.). In some implementations, a user's historical tracking can be used to define the dimensions of the dynamic boundary. For example, some users may naturally move more than others while experiencing a VR environment. Based on the historical tracking of a user's movements, some users may be given more latitude (e.g., a large dynamic boundary) than others so that the dynamic boundary is tailored to efficiently trigger XR system functionality for different user behaviors.

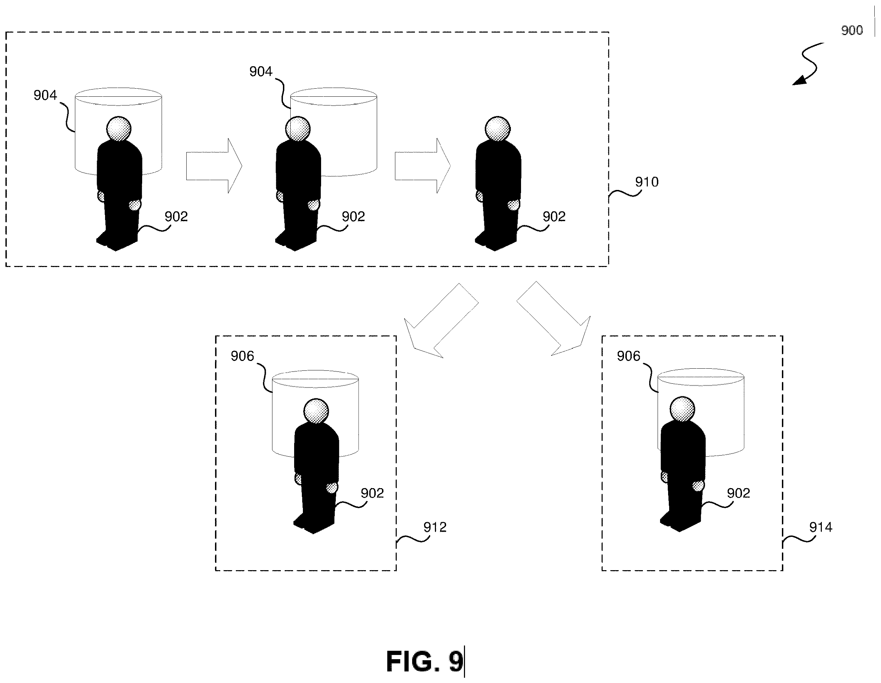

Figure 9 is a conceptual diagram 900 illustrating example variations for reforming a dynamic boundary. Diagram 900 includes user 902, formed dynamic boundary 904, reformed dynamic boundary 906, and scenarios 910, 912, and 914. Scenario 910 illustrates user 902 popping formed dynamic boundary 904 via user movements. Scenarios 912 and 914 illustrate different variations for reforming the dynamic boundary. For example, the movements of user 902 may meet a reforming criteria for the dynamic boundary, and reformed dynamic boundary 906 may be generated around user 902 in response.

In scenario 912, reformed dynamic boundary 906 is formed with respect to the body of user 902 at the time of reforming (e.g., with respect to the location of the user's head and/or any other suitable part(s) of the user's body). In scenario 914, reformed dynamic boundary 906 is formed with respect to a combination of the body of user 902 at the time of reforming and the previous location of formed dynamic boundary 904 prior to being popped. For example, scenario 910 illustrates that user 902 moved into formed dynamic boundary 904 to pop the boundary. Accordingly, in scenario 914, reformed dynamic boundary 906 is located between the body of user 902 and the previous location of formed dynamic boundary 904. In this variation, using the historical location of the dynamic boundary may locate reformed dynamic boundary 906 in a more optimal location for the movements of user 902. For example, user 902 may sway and/or lean side to side, and a reformed dynamic boundary 906 that leverages the historical location of formed dynamic boundary 904 is less likely to be triggered by these movements of user 902. In other examples, reformed dynamic boundary 906 as illustrated in scenario 912 may be the more optimal location. Reformed dynamic boundary 906 can be reformed (e.g., sized and/or located) in any other suitable manner.

Those skilled in the art will appreciate that the components illustrated in Figures 1-9 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 10A is a flow diagram illustrating a process 1000 used in some implementations of the present technology for triggering operating changes at an artificial reality (XR) system via a dynamic boundary. In some implementations, process 1000 can be performed by an XR system. In some implementations, process 1000 is triggered by an operating mode at the XR system, such as VR mode, stationary mode, standing/sitting mode, any combination thereof, or any other suitable mode.

At block 1002, process 1000 can generate a dynamic boundary. For example, a dynamic boundary can be generated for the user when the artificial reality system operates in certain operating modes (e.g., stationary mode, VR mode, seated mode, standing mode, or any combination thereof). In some implementations, the dynamic boundary is formed with respect to a predefined portion of the user's body, such as the user's head, torso, or any other suitable reference point of the user's body. The dynamic boundary can comprise a predefined size and shape, such as a cylinder with a predefined radius and height, a sphere with a predefined radius, a cuboid with predefined dimensions, or any other suitable shape. In some implementations, the size of the automatically generated dynamic boundary can be based on the user's body measurements (e.g., arm span, height, stride length, etc.).

At block 1004, process 1000 can display a VR environment to a user. For example, one or more applications that execute at the XR system can provide a VR environment for display to the user. The VR environment can be a three-dimensional immersive environment displayed to the user, and the dynamic boundary can enforce safe and/or conducive conditions while the user is displayed the VR environment.

At block 1006, process 1000 can detect whether user movement meets an expansion criteria. For example, the expansion criteria can comprise one or more distance thresholds that are triggered by user movements that are within close proximity to the dynamic boundary and/or exceed the dynamic boundary. User movements can be monitored to detect when the one or more distance thresholds are met. When user movement meets the expansion criteria, process 1000 can progress to block 1008. When user movement does not meet the expansion criteria, process 1000 can loop back to block 1004, where the VR environment can continue to be displayed until user movement is detected that meets the expansion criteria.

At block 1008, process 1000 can expand the dynamic boundary. For example, in response to the triggered expansion criteria, the dynamic boundary manager can expand a size of the dynamic boundary. The dynamic boundary can be expanded based on a predefined metric, the user's body measurements (e.g., arm span, height, stride length, etc.), and/or a velocity for the user's movements. In some implementations, the dynamic boundary is formed around the user at a predefined size and predefined shape, and expanding the size of the dynamic boundary comprises enlarging the predefined size while maintain the predefined shape.

In some implementations, dynamic boundary is the shape of a cylinder with a predefined height and radius. In some implementations, the predefined height and radius of the cylinder and the distance threshold of the expansion criteria causes expanding of the dynamic boundary in response to the user moving from seated to standing or standing to seated.

At block 1010, process 1000 can display a pass-through visual at a first opacity. For example, the pass-through visual of the user's real-world environment transitioned to that is responsive to the expansion criteria comprises a pass-through visual displayed at a first opacity (e.g., opacity of 60%, 70%, 80%, etc.). In this example, triggering the expansion criteria can indicate to the user, via the display transition, that the user's movements have triggered the dynamic boundary, however the dynamic boundary has not yet been fully triggered (e.g., popped), and thus the user can maintain the virtual reality environment by staying within the dynamic boundary.

At block 1012, process 1000 can detect whether user movement meets a pop criteria. For example, the pop criteria can comprise: one or more distance thresholds that are triggered by user movement within close proximity to the expanded dynamic boundary or that exceed the expanded dynamic boundary; and/or a velocity criteria that is triggered by user movement that meets or exceeds a velocity threshold. User movement can be monitored to detect whether the pop distances threshold(s) are met and/or the pop velocity threshold is met. When user movement meets the pop criteria, process 1000 can progress to process 1020 of Figure 10B. When user movement does not meet the pop criteria, process 1000 progress to block 1014.

At block 1014, process 1000 can detect whether user movement meets a reform criteria. For example, the reform criteria can comprise a reform velocity criteria that is triggered by user movement that meets or is below a reform velocity threshold for a threshold duration of time. In response to user movement that indicates the user is stationary (e.g., below the reform velocity threshold for the threshold duration of time), the dynamic boundary can be reformed. When user movement meets the reform criteria, process 1000 can progress to block 1016. When user movement does not meet the reform criteria, process 1000 loop back to block 1010, where the pass-through visual can be displayed at the first opacity until user movement meets the pop criteria and/or the reform criteria.

At block 1016, process 1000 can reform the dynamic boundary. For example, responsive to the triggered reform criteria, the dynamic boundary can be reformed with respect to the user, at the time of reforming. In some implementations, the reformed dynamic boundary can be generated at an initial size and grown to a predefined size associated with an automatically generated dynamic boundary. In some implementations, the dynamic boundary is reformed with respect to a predefined part of a body of the user at the time of reforming.

At block 1018, process 1000 can display the VR environment to the user. For example, responsive to the triggered reform criteria the XR system can transition from the displayed pass-through visual of the user's real-world environment at the first opacity to the VR environment (e.g., provided by one or more executing application(s).

Figure 10B is a flow diagram illustrating a process 1020 used in some implementations of the present technology for a popped state of a dynamic boundary. In some implementations, process 1020 can be performed by an XR system. In some implementations, process 1020 is triggered in response to user movements meeting a criteria for a dynamic boundary, such as at block 1012 of Figure 10.

At block 1022, process 1020 can pause one or more executing XR applications. For example, application(s) executing at the XR system can provide a VR environment for display to a user. Responsive to user movement that meets the pop criteria, the executing application(s) can be paused.

At block 1024, process 1020 can display a pass-through visual at a second opacity. For example, responsive to the pop criteria being met, the XR system can transition from a pass-through visual displayed at a first opacity to a pass-through visual displayed at a second opacity (e.g., fade from 80% opacity to 100% opacity, etc.)

In some implementations, while the XR system performs transition(s) from the VR environment to the pass-through visuals (e.g., at different opacity levels), such as in response to the expansion criteria and/or pop criteria being met, audio from the executing application(s) can be output to the user. A pause to the executing application(s) (as performed at block 1022) can also pause the audio from the executing application(s), and thus signal to the user that the application(s) have been paused.

At block 1026, process 1020 can detect whether user movement meets a reform criteria. For example, the reform criteria can comprise a reform velocity criteria that is triggered by user movement that meets or is below a reform velocity threshold for a threshold duration of time. In response to user movement that indicates the user is stationary (e.g., below the reform velocity threshold for the threshold duration of time), the dynamic boundary can be reformed. When user movement meets the reform criteria, process 1020 can progress to block 1028. When user movement does not meet the reform criteria, process 1020 loop back to block 1024, where the pass-through visual can be displayed at the second opacity until user movement meets the reform criteria.

At block 1028, process 1020 can reform the dynamic boundary. For example, responsive to the triggered reform criteria, the dynamic boundary can be reformed with respect to the user, at the time of reforming. In some implementations, the reformed dynamic boundary can be generated at an initial size and grown to a predefined size associated with an automatically generated dynamic boundary. In some implementations, the dynamic boundary is reformed with respect to a) a predefined part of a body of the user at a time of reforming, or b) a combination of the predefined part of the body of the user at the time of reforming and a location of the dynamic boundary prior to being popped (e.g., prior to pausing the executing application(s) at block 1022).

At block 1030, process 1020 can resume the paused XR application(s). For example, application(s) that provide a VR environment can be paused in response to user movement meeting a pop criteria (e.g., the dynamic boundary can be popped, causing a pause to the executing application(s). Responsive to user movement that meet the reform criteria, these paused application(s) can be resumed.

At block 1032, process 1020 can display the VR environment. For example, responsive to the triggered reform criteria the XR system can transition from the displayed pass-through visual of the user's real-world environment at the second opacity to the VR environment provided by resumed application(s).

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dialup connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method (1000) for triggering operating changes at an artificial reality, XR, system (100, 200, 250, 400) via a dynamic boundary, the method comprising:
displaying, by the XR system operating in stationary mode, a VR environment (504) to a user, wherein the dynamic boundary is automatically formed with respect to a user of the XR system;
in response (1006) to user movements that meet an expansion criteria of the dynamic boundary:
expanding (1008) a size of the dynamic boundary, and
fading (1010) a display of the XR system from the VR environment to a pass-through (506) visual of the user's real-world environment at a first opacity,
wherein the expansion criteria comprises one or more distance thresholds;
**characterised in that** the method further comprises
in response (1012) to user movements that meet a pop criteria of the dynamic boundary after the expanding:
pausing an executing VR application, and
fading (1024) the display of the XR system from the pass-through visual at the first opacity to a pass-through visual of the user's real-world environment at a second opacity,
wherein the pop criteria comprise a velocity threshold.

2. The method of claim 1, wherein the dynamic boundary is formed around the user at a predefined size and predefined shape, and expanding the size of the dynamic boundary comprises enlarging the predefined size while maintaining the predefined shape.

3. The method of claim 2, wherein the dynamic boundary is formed with respect to a location of a predefined part of a body of the user.

4. The method of claim 3, wherein the predefined part of the body of the user comprises the user's head.

5. The method of claim 2, wherein the dynamic boundary comprises a cylinder with a predefined height and radius.

6. The method of claim 5, wherein the predefined height and radius of the cylinder and the distance threshold of the expansion criteria causes the expanding of the dynamic boundary in response to the user moving from seated to standing or standing to seated.

7. The method of any preceding claim, wherein:
the XR system monitors user movement via one or more sensors,
user movement meets the expansion criteria when user movement is detected within the one or more distance thresholds with respect to the dynamic boundary, and
user movement meets the pop criteria when the user movement meets or exceeds the velocity threshold.

8. The method of any preceding claim, further comprising:
in response to user movement that meets a reform criteria of the dynamic boundary after the expanding and the pausing of the VR application:
resuming the paused VR application;
fading the display of the XR system from the pass-through visual at the second opacity to the VR environment; and
reforming (1016, 1028) the dynamic boundary with respect to the user, wherein the reform criteria comprises a reform velocity threshold.

9. The method of claim 8, wherein the dynamic boundary is automatically formed around the user at a predefined size and predefined shape, and the reformed dynamic boundary comprises the predefined size and the predefined shape.

10. The method of claim 9, wherein the dynamic boundary is reformed with respect to a) a predefined part of a body of the user at a time of reforming, or b) a combination of the predefined part of the body of the user at the time of reforming and a location of the dynamic boundary prior to pausing the executing VR application.

11. The method of claim 8, wherein:
the XR system monitors user movements via one or more sensors,
user movement meets the expansion criteria when user movement is detected within the one or more distance thresholds with respect to the dynamic boundary,
user movement meets the pop criteria when user movement that meets or exceeds the velocity threshold is detected; and
user movement meets the reform criteria when, after the dynamic boundary is expanded and the VR application is paused, user movement that meets or is below the reform velocity threshold is detected for a threshold duration of time.

12. A computer-readable storage medium storing instructions that, when executed by a computing system (100, 200, 250, 400), cause the computing system to perform a process for triggering operating changes at an artificial reality, XR, system via a dynamic boundary, the process comprising:
displaying, by the XR system operating in stationary mode, a VR environment (504) to a user, wherein the dynamic boundary is automatically formed with respect to a user of the XR system;
in response (1006) to user movements that meet an expansion criteria of the dynamic boundary:
expanding (1008) a size of the dynamic boundary, and
fading (1010) a display of the XR system from the VR environment to a pass-through visual of the user's real-world environment at a first opacity,
wherein the expansion criteria comprises one or more distance thresholds;
**characterised in that** the process further comprises
in response (1012) to user movements that meet a pop criteria of the dynamic boundary after the expanding:
pausing an executing VR application, and
fading (1024) the display of the XR system from the pass-through visual at the first opacity to a pass-through (506) visual of the user's real-world environment at a second opacity,
wherein the pop criteria comprise a velocity threshold.

13. The computer-readable storage medium of claim 12, storing instructions that, when executed by a computing system, cause the computing system to perform a process for triggering operating changes at an artificial reality, XR, system via a dynamic boundary, the process further comprising the method of any one of claims 2 to 11.

14. An artificial reality, XR, system (100, 200, 250, 400) for triggering operating changes via a dynamic boundary, the XR system comprising:
a display (1010);
one or more processors (110); and
one or more memories (150) storing instructions that, when executed by the one or more processors, cause the computing system to perform a process comprising:
displaying a VR environment (504) to a user;
executing software at the XR system using the dynamic boundary, wherein:
the dynamic boundary comprises an expansion criteria and a pop criteria;
the expansion criteria comprises one or more distance thresholds with respect to the dynamic boundary, and, in response (1006) to user movement that meets the expansion criteria:
the dynamic boundary transitions (1008) to an expanded state; and
the display of the XR system fades (1010) from the VR environment to a pass-through (506) visual of the user's real-world environment at a first opacity,
**characterised in that**
the pop criteria comprises a velocity criteria and, in response
to user movement that meets the pop criteria while the dynamic boundary is in the expanded state:
the dynamic boundary transitions to a popped state and an executing VR application is paused; and
the display of the XR system fades (1024) from the pass-through visual at the first opacity to a pass-through visual of the user's real-world environment at a second opacity.

15. The system of claim 14, wherein:
in response (1006) to user movement that meets the expansion criteria, the XR system transitions (1010) from displaying the VR environment to displaying a pass-through (506) visual at a first opacity,
in response (1012) to user movement that meets the pop criteria while the dynamic boundary is in the expanded state, the XR system transitions (1024) from displaying the pass-through visual at a first opacity to displaying a passthrough visual at a second opacity,
in response (1016) to user movement that meets the reform criteria while the dynamic boundary is in the expanded state, the XR system transitions from displaying the pass-through visual at the first opacity to displaying the VR environment, and
in response (1028) to user movement that meets the reform criteria while the dynamic boundary is in the popped state, the XR system transitions from displaying the pass-through visual at the second opacity to displaying the VR environment.

16. The system of claim 14 or claim 15, wherein the dynamic boundary further comprises a reform criteria, and wherein the reform criteria comprises a velocity criteria and:
a) in response to user movement that meets the reform criteria while the dynamic boundary is in the expanded state, the dynamic boundary transitions to a reformed state, and
b) in response to user movement that meets the reform criteria while the dynamic boundary is in the popped state, the dynamic boundary transitions to a reformed state and the paused VR application is resumed.

## Patentansprüche

1. Ein Verfahren (1000) zum Auslösen von Betriebsänderungen an einem System (100, 200, 250, 400) für künstliche Realität, XR, über eine dynamische Begrenzung, wobei das Verfahren Folgendes beinhaltet:
Anzeigen, durch das im stationären Modus betriebene XR-System, einer VR-Umgebung (504) für einen Benutzer, wobei die dynamische Begrenzung in Bezug auf einen Benutzer des XR-Systems automatisch gebildet wird;
als Reaktion (1006) auf Benutzerbewegungen, die ein Erweiterungskriterium der dynamischen Begrenzung erfüllen:
Erweitern (1008) einer Größe der dynamischen Begrenzung und
Überblenden (1010) einer Anzeige des XR-Systems von der VR-Umgebung zu einer Pass-Through-Darstellung (506) der realen Umgebung des Benutzers mit einer ersten Opazität,
wobei das Erweiterungskriterium einen oder mehrere Abstandsschwellenwerte beinhaltet;
**dadurch gekennzeichnet, dass** das Verfahren ferner Folgendes beinhaltet:
als Reaktion (1012) auf Benutzerbewegungen, die ein Auflösungskriterium der dynamischen Begrenzung nach dem Erweitern erfüllen:
Pausieren einer ausgeführten VR-Anwendung und
Überblenden (1024) der Anzeige des XR-Systems von der Pass-Through-Darstellung mit der ersten Opazität zu einer Pass-Through-Darstellung der realen Umgebung des Benutzers mit einer zweiten Opazität,
wobei das Auflösungskriterium einen Geschwindigkeitsschwellenwert beinhaltet.

2. Verfahren gemäß Anspruch 1, wobei die dynamische Begrenzung um den Benutzer herum mit einer vordefinierten Größe und vordefinierten Form gebildet wird und das Erweitern der Größe der dynamischen Begrenzung das Vergrößern der vordefinierten Größe unter Beibehaltung der vordefinierten Form beinhaltet.

3. Verfahren gemäß Anspruch 2, wobei die dynamische Begrenzung in Bezug auf eine Position eines vordefinierten Teils eines Körpers des Benutzers gebildet wird.

4. Verfahren gemäß Anspruch 3, wobei der vordefinierte Teil des Körpers des Benutzers aus dem Kopf des Benutzers besteht.

5. Verfahren gemäß Anspruch 2, wobei die dynamische Begrenzung aus einem Zylinder mit einer vordefinierten Höhe und einem vordefinierten Radius besteht.

6. Verfahren gemäß Anspruch 5, wobei die vordefinierte Höhe und der vordefinierte Radius des Zylinders und der Abstandsschwellenwert des Erweiterungskriteriums das Erweitern der dynamischen Begrenzung als Reaktion darauf bewirken, dass sich der Benutzer von sitzend zu stehend oder stehend zu sitzend bewegt.

7. Verfahren gemäß einem der vorhergehenden Ansprüche, wobei:
das XR-System eine Benutzerbewegung über einen oder mehrere Sensoren überwacht,
die Benutzerbewegung das Erweiterungskriterium erfüllt, wenn die Benutzerbewegung innerhalb des einen oder der mehreren Abstandsschwellenwerte in Bezug auf die dynamische Begrenzung erfasst wird, und
die Benutzerbewegung das Auflösungskriterium erfüllt, wenn die Benutzerbewegung den Geschwindigkeitsschwellenwert erreicht oder überschreitet.

8. Verfahren gemäß einem der vorhergehenden Ansprüche, das ferner Folgendes beinhaltet:
als Reaktion auf eine Benutzerbewegung, die ein Neubildungskriterium der dynamischen Begrenzung nach dem Erweitern und Pausieren der VR-Anwendung erfüllt:
Fortsetzen der pausierten VR-Anwendung;
Überblenden der Anzeige des XR-Systems von der Pass-Through-Darstellung mit der zweiten Opazität zu der VR-Umgebung; und
Neubilden (1016, 1028) der dynamischen Begrenzung in Bezug auf den Benutzer, wobei das Neubildungskriterium einen Neubildungsgeschwindigkeitsschwellenwert beinhaltet.

9. Verfahren gemäß Anspruch 8, wobei die dynamische Begrenzung automatisch um den Benutzer herum mit einer vordefinierten Größe und vordefinierten Form gebildet wird und die neugebildete dynamische Begrenzung die vordefinierte Größe und die vordefinierte Form beinhaltet.

10. Verfahren gemäß Anspruch 9, wobei die dynamische Begrenzung in Bezug auf a) einen vordefinierten Teil eines Körpers des Benutzers zu einem Zeitpunkt des Neubildens oder b) eine Kombination aus dem vordefinierten Teil des Körpers des Benutzers zum Zeitpunkt des Neubildens und einer Position der dynamischen Begrenzung vor dem Pausieren der ausgeführten VR-Anwendung neugebildet wird.

11. Verfahren gemäß Anspruch 8, wobei:
das XR-System Benutzerbewegungen über einen oder mehrere Sensoren überwacht, die Benutzerbewegung das Erweiterungskriterium erfüllt, wenn die Benutzerbewegung innerhalb des einen oder der mehreren Abstandsschwellenwerte in Bezug auf die dynamische Begrenzung erfasst wird,
die Benutzerbewegung das Auflösungskriterium erfüllt, wenn die Benutzerbewegung, die den Geschwindigkeitsschwellenwert erreicht oder überschreitet, erfasst wird; und
die Benutzerbewegung das Neubildungskriterium erfüllt, wenn, nachdem die dynamische Begrenzung erweitert und die VR-Anwendung pausiert wurde, eine Benutzerbewegung, die den Neubildungsgeschwindigkeitsschwellenwert erreicht oder unter diesem liegt, für eine Schwellenzeitdauer erfasst wird.

12. Ein rechnerlesbares Speichermedium, das Anweisungen speichert, die, wenn sie von einem Rechensystem (100, 200, 250, 400) ausgeführt werden, das Rechensystem veranlassen, einen Prozess zum Auslösen von Betriebsänderungen an einem System für künstliche Realität, XR, über eine dynamische Begrenzung durchzuführen, wobei der Prozess Folgendes beinhaltet:
Anzeigen, durch das im stationären Modus betriebene XR-System, einer VR-Umgebung (504) für einen Benutzer, wobei die dynamische Begrenzung in Bezug auf einen Benutzer des XR-Systems automatisch gebildet wird;
als Reaktion (1006) auf Benutzerbewegungen, die ein Erweiterungskriterium der dynamischen Begrenzung erfüllen:
Erweitern (1008) einer Größe der dynamischen Begrenzung und
Überblenden (1010) einer Anzeige des XR-Systems von der VR-Umgebung zu einer Pass-Through-Darstellung der realen Umgebung des Benutzers mit einer ersten Opazität,
wobei das Erweiterungskriterium einen oder mehrere Abstandsschwellenwerte beinhaltet;
**dadurch gekennzeichnet, dass** der Prozess ferner Folgendes beinhaltet:
als Reaktion (1012) auf Benutzerbewegungen, die ein Auflösungskriterium der dynamischen Begrenzung nach dem Erweitern erfüllen:
Pausieren einer ausgeführten VR-Anwendung und
Überblenden (1024) der Anzeige des XR-Systems von der Pass-Through-Darstellung mit der ersten Opazität zu einer Pass-Through-Darstellung (506) der realen Umgebung des Benutzers mit einer zweiten Opazität,
wobei das Auflösungskriterium einen Geschwindigkeitsschwellenwert beinhaltet.

13. Rechnerlesbares Speichermedium gemäß Anspruch 12, das Anweisungen speichert, die, wenn sie von einem Rechensystem ausgeführt werden, das Rechensystem veranlassen, einen Prozess zum Auslösen von Betriebsänderungen an einem System für künstliche Realität, XR, über eine dynamische Begrenzung durchzuführen, wobei der Prozess ferner das Verfahren gemäß einem der Ansprüche 2 bis 11 beinhaltet.

14. Ein System (100, 200, 250, 400) für künstliche Realität, XR, zum Auslösen von Betriebsänderungen über eine dynamische Begrenzung, wobei das XR-System Folgendes beinhaltet:
eine Anzeige (1010);
einen oder mehrere Prozessoren (110); und
einen oder mehrere Arbeitsspeicher (150), die Anweisungen speichern, die, wenn sie von dem einen oder den mehreren Prozessoren ausgeführt werden, das Rechensystem veranlassen, einen Prozess durchzuführen, der Folgendes beinhaltet:
Anzeigen einer VR-Umgebung (504) für einen Benutzer;
Ausführen von Software an dem XR-System unter Verwendung der dynamischen Begrenzung, wobei:
die dynamische Begrenzung ein Erweiterungskriterium und ein Auflösungskriterium beinhaltet;
das Erweiterungskriterium einen oder mehrere Abstandsschwellenwerte in Bezug auf die dynamische Begrenzung beinhaltet und als Reaktion (1006) auf eine Benutzerbewegung, die das Erweiterungskriterium erfüllt:
die dynamische Begrenzung in einen erweiterten Zustand übergeht (1008); und
die Anzeige des XR-Systems von der VR-Umgebung zu einer Pass-Through-Darstellung (506) der realen Umgebung des Benutzers mit einer ersten Opazität überblendet (1010),
**dadurch gekennzeichnet, dass**
das Auflösungskriterium ein Geschwindigkeitskriterium beinhaltet und als Reaktion auf eine Benutzerbewegung, die das Auflösungskriterium erfüllt, während sich die dynamische Begrenzung im erweiterten Zustand befindet:
die dynamische Begrenzung in einen aufgelösten Zustand übergeht und eine ausgeführte VR-Anwendung pausiert wird; und
die Anzeige des XR-Systems von der Pass-Through-Darstellung mit der ersten Opazität zu einer Pass-Through-Darstellung der realen Umgebung des Benutzers mit einer zweiten Opazität überblendet (1024).

15. System gemäß Anspruch 14, wobei:
als Reaktion (1006) auf eine Benutzerbewegung, die das Erweiterungskriterium erfüllt, das XR-System vom Anzeigen der VR-Umgebung zum Anzeigen einer Pass-Through-Darstellung (506) mit einer ersten Opazität übergeht (1010),
als Reaktion (1012) auf eine Benutzerbewegung, die das Auflösungskriterium erfüllt, während sich die dynamische Begrenzung im erweiterten Zustand befindet, das XR-System vom Anzeigen der Pass-Through-Darstellung mit einer ersten Opazität zum Anzeigen einer Pass-Through-Darstellung mit einer zweiten Opazität übergeht (1024), als Reaktion (1016) auf eine Benutzerbewegung, die das Neubildungskriterium erfüllt, während sich die dynamische Begrenzung im erweiterten Zustand befindet, das XR-System vom Anzeigen der Pass-Through-Darstellung mit der ersten Opazität zum Anzeigen der VR-Umgebung übergeht und
als Reaktion (1028) auf eine Benutzerbewegung, die das Neubildungskriterium erfüllt, während sich die dynamische Begrenzung im aufgelösten Zustand befindet, das XR-System vom Anzeigen der Pass-Through-Darstellung mit der zweiten Opazität zum Anzeigen der VR-Umgebung übergeht.

16. System gemäß Anspruch 14 oder Anspruch 15, wobei die dynamische Begrenzung ferner ein Neubildungskriterium beinhaltet und wobei das Neubildungskriterium ein Geschwindigkeitskriterium beinhaltet und:
a) als Reaktion auf eine Benutzerbewegung, die das Neubildungskriterium erfüllt, während sich die dynamische Begrenzung im erweiterten Zustand befindet, die dynamische Begrenzung in einen neugebildeten Zustand übergeht und
b) als Reaktion auf eine Benutzerbewegung, die das Neubildungskriterium erfüllt, während sich die dynamische Begrenzung im aufgelösten Zustand befindet, die dynamische Begrenzung in einen neugebildeten Zustand übergeht und die pausierte VR-Anwendung fortgesetzt wird.

## Revendications

1. Un procédé (1000) pour déclencher des changements de fonctionnement au niveau d'un système de réalité étendue, XR, (100, 200, 250, 400) par l'intermédiaire d'une limite dynamique, le procédé comprenant :
l'affichage, par le système XR fonctionnant en mode stationnaire, d'un environnement de RV (504) à l'intention d'un utilisateur, la limite dynamique étant formée automatiquement par rapport à un utilisateur du système XR ;
en réponse (1006) à des mouvements d'utilisateur qui satisfont à un critère d'élargissement de la limite dynamique :
l'élargissement (1008) d'une taille de la limite dynamique, et
le fondu (1010), sur un dispositif d'affichage du système XR, de l'environnement de RV à une vue en transparence (506) de l'environnement du monde réel de l'utilisateur à une première opacité,
le critère d'élargissement comprenant un ou plusieurs seuils de distance ;
**caractérisé en ce que** le procédé comprend en outre
en réponse (1012) à des mouvements d'utilisateur qui satisfont à un critère d'éclatement de la limite dynamique après l'élargissement :
la mise en pause d'une application de RV en cours d'exécution, et
le fondu (1024), sur le dispositif d'affichage du système XR, de la vue en transparence à la première opacité à une vue en transparence de l'environnement du monde réel de l'utilisateur à une deuxième opacité,
dans lequel le critère d'éclatement comprend un seuil de vitesse.

2. Le procédé de la revendication 1, dans lequel la limite dynamique est formée autour de l'utilisateur avec une taille et une forme prédéfinies, et l'élargissement de la taille de la limite dynamique comprend l'agrandissement de la taille prédéfinie tout en maintenant la forme prédéfinie.

3. Le procédé de la revendication 2, dans lequel la limite dynamique est formée par rapport à un emplacement d'une partie prédéfinie d'un corps de l'utilisateur.

4. Le procédé de la revendication 3, dans lequel la partie prédéfinie du corps de l'utilisateur comprend la tête de l'utilisateur.

5. Le procédé de la revendication 2, dans lequel la limite dynamique comprend un cylindre ayant une hauteur et un rayon prédéfinis.

6. Le procédé de la revendication 5, dans lequel la hauteur et le rayon prédéfinis du cylindre et le seuil de distance du critère d'élargissement provoquent l'élargissement de la limite dynamique en réponse au fait que l'utilisateur passe d'assis à debout ou de debout à assis.

7. Le procédé de n'importe quelle revendication précédente, dans lequel :
le système XR surveille un mouvement d'utilisateur par l'intermédiaire d'un ou plusieurs capteurs,
un mouvement d'utilisateur satisfait au critère d'élargissement lorsqu'un mouvement d'utilisateur est détecté en deçà des un ou plusieurs seuils de distance par rapport à la limite dynamique, et
un mouvement d'utilisateur satisfait au critère d'éclatement lorsque le mouvement d'utilisateur atteint ou dépasse le seuil de vitesse.

8. Le procédé de n'importe quelle revendication précédente, comprenant en outre :
en réponse à un mouvement d'utilisateur qui satisfait à un critère de reformation de la limite dynamique après l'élargissement et la mise en pause de l'application de RV :
la reprise de l'application de RV mise en pause ;
le fondu, sur le dispositif d'affichage du système XR, de la vue en transparence à la deuxième opacité à l'environnement de RV ; et
la reformation (1016, 1028) de la limite dynamique par rapport à l'utilisateur, dans lequel le critère de reformation comprend un seuil de vitesse de reformation.

9. Le procédé de la revendication 8, dans lequel la limite dynamique est formée automatiquement autour de l'utilisateur avec une taille et une forme prédéfinies, et la limite dynamique reformée comprend la taille prédéfinie et la forme prédéfinie.

10. Le procédé de la revendication 9, dans lequel la limite dynamique est reformée par rapport à a) une partie prédéfinie d'un corps de l'utilisateur à un moment de reformation, ou b) une combinaison de la partie prédéfinie du corps de l'utilisateur au moment de reformation et d'un emplacement de la limite dynamique avant la mise en pause de l'application de RV en cours d'exécution.

11. Le procédé de la revendication 8, dans lequel :
le système XR surveille des mouvements d'utilisateur par l'intermédiaire d'un ou plusieurs capteurs,
un mouvement d'utilisateur satisfait au critère d'élargissement lorsqu'un mouvement d'utilisateur est détecté en deçà des un ou plusieurs seuils de distance par rapport à la limite dynamique,
un mouvement d'utilisateur satisfait au critère d'éclatement lorsqu'un mouvement d'utilisateur qui atteint ou dépasse le seuil de vitesse est détecté ; et
un mouvement d'utilisateur satisfait au critère de reformation lorsque, après que la limite dynamique a été élargie et que l'application de RV a été mise en pause, un mouvement d'utilisateur qui atteint ou est inférieur au seuil de vitesse de reformation est détecté pendant une durée seuil.

12. Un support de stockage lisible par ordinateur stockant des instructions qui, lorsqu'elles sont exécutées par un système informatique (100, 200, 250, 400), amènent le système informatique à effectuer un processus pour déclencher des changements de fonctionnement au niveau d'un système de réalité étendue, XR, par l'intermédiaire d'une limite dynamique, le processus comprenant :
l'affichage, par le système XR fonctionnant en mode stationnaire, d'un environnement de RV (504) à l'intention d'un utilisateur, la limite dynamique étant formée automatiquement par rapport à un utilisateur du système XR ;
en réponse (1006) à des mouvements d'utilisateur qui satisfont à un critère d'élargissement de la limite dynamique :
l'élargissement (1008) d'une taille de la limite dynamique, et
le fondu (1010), sur un dispositif d'affichage du système XR, de l'environnement de RV à une vue en transparence de l'environnement du monde réel de l'utilisateur à une première opacité,
le critère d'élargissement comprenant un ou plusieurs seuils de distance ;
**caractérisé en ce que** le processus comprend en outre
en réponse (1012) à des mouvements d'utilisateur qui satisfont à un critère d'éclatement de la limite dynamique après l'élargissement :
la mise en pause d'une application de RV en cours d'exécution, et
le fondu (1024), sur le dispositif d'affichage du système XR, de la vue en transparence à la première opacité à une vue en transparence (506) de l'environnement du monde réel de l'utilisateur à une deuxième opacité,
dans lequel le critère d'éclatement comprend un seuil de vitesse.

13. Le support de stockage lisible par ordinateur de la revendication 12, stockant des instructions qui, lorsqu'elles sont exécutées par un système informatique, amènent le système informatique à effectuer un processus pour déclencher des changements de fonctionnement au niveau d'un système de réalité étendue, XR, par l'intermédiaire d'une limite dynamique, le processus comprenant en outre le procédé de l'une quelconque des revendications 2 à 11.

14. Un système de réalité étendue, XR, (100, 200, 250, 400) pour déclencher des changements de fonctionnement par l'intermédiaire d'une limite dynamique, le système XR comprenant :
un dispositif d'affichage (1010) ;
un ou plusieurs processeurs (110) ; et
une ou plusieurs mémoires (150) stockant des instructions qui, lorsqu'elles sont exécutées par les un ou plusieurs processeurs, amènent le système informatique à effectuer un processus comprenant :
l'affichage d'un environnement de RV (504) à l'intention d'un utilisateur ;
l'exécution d'un logiciel au niveau du système XR en utilisant la limite dynamique, dans lequel :
la limite dynamique comprend un critère d'élargissement et un critère d'éclatement ;
le critère d'élargissement comprend un ou plusieurs seuils de distance par rapport à la limite dynamique, et, en réponse (1006) à un mouvement d'utilisateur qui satisfait au critère d'élargissement :
la limite dynamique passe (1008) à un état élargi ; et
le dispositif d'affichage du système XR fait un fondu (1010) de l'environnement de RV à une vue en transparence (506) de l'environnement du monde réel de l'utilisateur à une première opacité,
**caractérisé en ce que**
le critère d'éclatement comprend un critère de vitesse et, en réponse à un mouvement d'utilisateur qui satisfait au critère d'éclatement alors que la limite dynamique est dans l'état élargi :
la limite dynamique passe à un état éclaté et une application de RV en cours d'exécution est mise en pause ; et
le dispositif d'affichage du système XR fait un fondu (1024) de la vue en transparence à la première opacité à une vue en transparence de l'environnement du monde réel de l'utilisateur à une deuxième opacité.

15. Le système de la revendication 14, dans lequel :
en réponse (1006) à un mouvement d'utilisateur qui satisfait au critère d'élargissement, le système XR passe (1010) de l'affichage de l'environnement de RV à l'affichage d'une vue en transparence (506) à une première opacité,
en réponse (1012) à un mouvement d'utilisateur qui satisfait au critère d'éclatement alors que la limite dynamique est dans l'état élargi, le système XR passe (1024) de l'affichage de la vue en transparence à une première opacité à l'affichage d'une vue en transparence à une deuxième opacité,
en réponse (1016) à un mouvement d'utilisateur qui satisfait au critère de reformation alors que la limite dynamique est dans l'état élargi, le système XR passe de l'affichage de la vue en transparence à la première opacité à l'affichage de l'environnement de RV, et
en réponse (1028) à un mouvement d'utilisateur qui satisfait au critère de reformation alors que la limite dynamique est dans l'état éclaté, le système XR passe de l'affichage de la vue en transparence à la deuxième opacité à l'affichage de l'environnement de RV.

16. Le système de la revendication 14 ou de la revendication 15, dans lequel la limite dynamique comprend en outre un critère de reformation, et dans lequel le critère de reformation comprend un critère de vitesse et :
a) en réponse à un mouvement d'utilisateur qui satisfait au critère de reformation alors que la limite dynamique est dans l'état élargi, la limite dynamique passe à un état reformé, et
b) en réponse à un mouvement d'utilisateur qui satisfait au critère de reformation alors que la limite dynamique est dans l'état éclaté, la limite dynamique passe à un état reformé et l'application de RV mise en pause est reprise.
